# EUROPÄISCHE PATENTSCHRIFT

(11) **EP 4 585 838 B1**
(45) Veröffentlichungstag und Bekanntmachung des Hinweises auf die Patenterteilung: **11.02.2026**
(21) Anmeldenummer: 24151243.3
(22) Anmeldetag: 10.01.2024
(51) Int. Cl.: F16K 31/56, F16K 31/60

(54) **VENTILOBERTEIL FÜR SANITÄRARMATUREN**
VALVE UPPER PART FOR SANITARY FITTINGS
PARTIE SUPÉRIEURE DE SOUPAPE POUR ROBINETTERIES SANITAIRES

(43) Veröffentlichungstag der Anmeldung: 16.07.2025
(73) Patentinhaber: Flühs Drehtechnik GmbH, 58515 Lüdenscheid (DE)
(72) Erfinder: ROICKE, Stefan, 58849 Herscheid (DE)
(74) Vertreter: Patentanwälte Dörner & Kötter PartG mbB

(56) Entgegenhaltungen:
- EP-A1- 1 696 162
- EP-A1- 4 155 590
- DE-U1- 202023 101 163

## Beschreibung

Die Erfindung betrifft ein Ventiloberteil für Sanitärarmaturen, mit einem Kopfstück, das von einer Steuerspindel axial durchsetzt ist, über die ein in dem Kopfstück angeordneter Ventilkörper betätigbar ist, und die mit einer einen Griff umfassenden Bedieneinrichtung verbunden ist, wobei der Griff (1) relativ zum Kopfstück (83) koaxial zur Steuerspindel (81) verschiebbar ist.

Mit Hilfe von Ventiloberteilen wird der Austritt von Medien aus Armaturen gesteuert. Zu diesem Zweck wird das Ventiloberteil mittels seines Kopfstücks in das Gehäuse einer Armatur geschraubt. Ventiloberteile der vorgenannten Art sind in den unterschiedlichsten Ausgestaltungen bekannt. So ist beispielsweise aus der EP 3 062 002 A1 ein Ventiloberteil bekannt, das ein Kopfstück aufweist, das von einer Spindel durchsetzt ist, die in dem Kopfstück formschlüssig mit einer Steuerscheibe verbunden ist, die an einer ortsfest angeordneten Einlassscheibe anliegt. Durch Drehung der Steuerscheibe gegenüber der Einlassscheibe ist eine Steuerung des Wasserdurchflusses erzielt. Zur Betätigung der Spindel ist diese an ihrer aus dem Kopfstück herausragenden Stirnseite außen als Außenvielkant ausgeführt und innen mit einem Gewindesackloch für die formschlüssige Befestigung eines Drehgriffs versehen.

Aus der EP 2 522 887 A1 ist weiterhin ein Ventiloberteil bekannt, bei dem zur Steuerung des Durchflusses eines Fluids ein Ventilkörper vorgesehen ist, der über eine Spindel innerhalb des Kopfstücks linear bewegbar ist. Hierbei ist eine Spindel drehbar in einem Kopfstück gelagert und über ein Gewinde mit einem verdrehsicher axial in dem Kopfstück geführten Ventilkörper verbunden. Eine Drehung der Spindel bewirkt so eine axiale Bewegung des Ventilkörpers innerhalb des Kopfstücks.

Bei der Gestaltung von Armaturen wird zunehmend eine Bedienung des Ventiloberteils über Drücker oder Taster gewünscht. Hierzu kommen regelmäßig elektromagnetisch betriebene Ventile zum Einsatz. Nachteilig an diesen Ventiloberteilen ist jedoch, dass die elektromagnetischen Kontakte bei der Verschraubung bzw. Verklebung des Ventiloberteils in Mitleidenschaft gezogen werden können, wodurch die Zuverlässigkeit beeinträchtigt ist. Darüber hinaus erfordern solche Ventile eine zusätzliche Spannungsquelle. Zudem ist bei diesen Ventilen in der Regel keine Mengensteuerung möglich.

Zur Überwindung dieser Nachteile wird in der EP 3 366 959 A1 ein Ventiloberteil vorgeschlagen, bei dem der Griff eine Steuerkappe aufweist, mit der er entlang des Kopfstücks verschiebbar ist und über die ein Steuerkolben betätigbar ist, wobei in die Mantelfläche des Kopfstücks außen eine zwei Arretierungspositionen aufweisende Kurvenbahn eingebracht ist, in die ein an der Steuerkappe angeordneter Führungsstift eingreift. Durch eine Druckbetätigung des Griffs mit der Steuerkappe ist eine geführte axiale Bewegung des Steuerkolbens erzielt, welche in wenigstens zwei Positionen, beispielsweise in den Positionen "Ventil geöffnet" und "Ventil geschlossen" arretierbar ist.

Das vorstehende, auch als "Push-Ventil" bezeichnete Ventiloberteil hat sich in der Praxis bewährt. Gleichwohl ist dieses Ventil auf eine Drückbetätigung beschränkt. Für Aufgaben, die eine Drückbetätigung, beispielsweise Umschalten des Wasserausgangs (Brause / Schwalldusche) oder auch Versenken des Ventilgriffs bei Nichtgebrauch) und eine Drehbetätigung, beispielsweise zur Einstellung des Wasservolumenstroms, erfordern, ist der Einsatz mehrerer solcher "Push-Ventile" erforderlich.

Vor diesem Hintergrund wird in der DE 20 2023 101 163 U1 ein Ventiloberteil vorgeschlagen, das sowohl eine Drückbetätigung, als auch eine Drehbetätigung ermöglicht. Hierbei ist der Griff auf die Spindel des Ventiloberteils aufgeschoben und auf dieser verschiebbar gelagert. Durch axialen Zug des Griffs kann dieser in zwei unterschiedlichen Positionen verbracht werden, in denen er arretierbar ist. Bei übermäßigem Zug an dem Griff besteht hier jedoch die Gefahr, den Griff unbeabsichtigt von der Spindel zu entfernen.

Hier will die Erfindung Abhilfe schaffen. Der Erfindung liegt die Aufgabe zu Grunde, ein Ventiloberteil bereitzustellen, bei dem ein unbeabsichtigtes Entfernen des Griffs von der Spindel vermieden ist. Gemäß der Erfindung wird diese Aufgabe durch ein Ventiloberteil mit den Merkmalen des Patentanspruchs 1 gelöst.

Mit der Erfindung ist ein Ventiloberteil bereitgestellt, bei dem ein unbeabsichtigtes Entfernen des Griffs von der Spindel vermieden ist. Dadurch, dass der Griff über ein Adapterstück mit der Spindel verbunden ist, das in dem Griff verschiebbar gelagert ist, wobei das Adapterstück in dem Griff verliersicher gehalten ist, ist ein unbeabsichtigtes Entfernen des Griffs von der Spindel vermieden.

Erfindungsgemäß ist das Adapterstück bereichsweise mit einem Außengewinde versehen und der Griff ist bereichsweise mit einen Innengewinde versehen wobei das Außengewinde des Adapterstücks in das Innengwinde Griffs eingeschraubt und nachfolgend überdreht ist, wodurch die Verliersicherung gebildet ist. Hierdurch ist eine einfache Installation der Verliersicherung im Zuge der Montage erzielt.

In Ausgestaltung der Erfindung weist der Griff einen innen umlaufenden Innengewindesteg auf und das Adapterstück weist einen zumindest bereichsweise außen umlaufend angeordneten Außengewindesteg auf, der in den Innengewindesteg eingeschraubt und nachfolgend derart überdreht ist, dass sich der Außengewindesteg in Richtung des Griffs gesehen hinter dem Innengewindesteg befindet. Hierdurch ist eine zuverlässige Verliersicherung erzielt, wobei der Griff auf der Spindel drehbar gehalten ist. Bevorzugt ist in dem Griff eine Stellhülse angeordnet, die den umlaufenden Gewindesteg aufweist und in der das Adapterstück verschiebbar gelagert ist.

In weiterer Ausgestaltung der Erfindung ist der Griff relativ zum Kopfstück drehbar und zumindest in einer axialen Position drehfest mit der Steuerspindel verbunden. Hierdurch ist sowohl eine Druckbetätigung, als auch eine Drehbetätigung ermöglicht.

In Weiterbildung der Erfindung weist das Adapterstück zumindest bereichsweise umlaufend wenigstens ein Rastmittel auf, wobei innen in dem Griff oder der Stellhülse wenigstens eine Rastnut angeordnet ist, mit der das wenigstens eine Rastmittel in einer definierten Position des Adapterstücks in dem Griff oder in der Stellhülse verrastbar sind. Hierdurch ist eine definierte axiale Positionierung der Stellhülse auf dem Adapterstück ermöglicht.

In Ausgestaltung der Erfindung ist das wenigstens eine Rastmittel durch eine oder mehrere Rastnasen gebildet. Alternativ oder zusätzlich kann das Rastmittel auch durch ein umlaufendes elastisches Ringelement, vorzugsweise durch einen O-Ring gebildet sein.

In weiterer Ausgestaltung der Erfindung sind innen in dem Griff oder der Stellhülse axial beabstandet zueinander zwei Rastnuten vorzugsweise radial umlaufend angeordnet. Hierdurch sind zwei definierte axiale Positionen des Griffs erzielt, wodurch eine definierte erste axiale Position für eine drehfeste Verbindung des Griffs mit der Steuerspindel und eine definierte zweite axiale Position ohne drehfeste Verbindung des Griffs mit der Steuerspindel ermöglicht ist.

In Weiterbildung der Erfindung ist der Griff oder die Stellhülse mit einer Innenverzahnung versehen, die in einer Außenverzahnung eines mit der Steuerspindel verbundenen Mitnehmers eingreift, wodurch der Griff axial entlang dem Mitnehmer verschiebbar geführt ist. Hierdurch ist durch eine Längsverschiebung des Griffs bedarfsweise eine drehfeste Verbindung mit der Steuerspindel erzielbar.

In Ausgestaltung der Erfindung ist der Griff über eine angeordnete Arretiereinrichtung in wenigstens zwei axialen Positionen festlegbar. Dabei umfasst die Arretiereinrichtung bevorzugt einen Steuerkolben, der in einem Steuerzylinder geführt ist und der eine Steuerkulisse aufweist, in die ein an dem Steuerzylinder angeordnetes Eingriffsteil eingreift, das vorzugsweise durch eine Kugel gebildet ist, die in dem Steuerzylinder radial bewegbar geführt ist, wobei zwischen dem Steuerzylinder und dem Steuerkolben eine Feder angeordnet ist, die gegen den Steuerzylinder vorgespannt ist. Hierdurch ist eine automatische Rückführung des mit dem Griff verbundenen Steuerzylinders entlang des Steuerkolbens nach Einwirkung einer Betätigungskraft bewirkt.

In weiterer Ausgestaltung der Erfindung weist der Steuerkolben den Mitnehmer auf, in dessen Außenverzahnung die Innenverzahnung der Stellhülse eingreift. Bevorzugt weist der Steuerzylinder ein Außengewinde auf, auf welches das Adapterstück mit seinem Innengewinde aufgeschraubt ist. Hierdurch ist eine Feineinstellung der axialen Position des Griffs an der Spindel eines in einer Wand eingebauten Ventiloberteils ermöglicht. Durch eine Längsverschiebung des Griffs in eine Position, in welcher die Stellhülse nicht mit ihrer Innenverzahnung in die Außenverzahnung des Steuerkolbens eingreift, erfolgt durch eine Drehung des Griffs eine Längsverstellung des Adapterstücks entlang des Außengewindes des Steuerkolbens. Ungenauigkeiten im Zuge des Einbaus eines Ventiloberteils und der in diesem Zuge üblicherweise erfolgten bedarfsgerechten Ablängung der Steuerspindel können so durch Verstellung des Adapterstücks ausgeglichen werden.

Gegenstand der vorliegenden Erfindung ist weiterhin eine Sanitärarmatur mit einem Ventiloberteil nach dem Patentanspruch 15.

Unter einer "Justierposition" ist vorliegend die Stellung des Griffs zu verstehen, in der die Rastmittel des Adapterstücks in die zweite, untere Rastnut der Stellhülse eingreift. In dieser Position ist eine Justierung über den Gewindeeingriff zwischen dem Außengewinde des Steuerzylinders und dem Innengewinde des Adapterstücks ermöglicht. Die Innenverzahnung der Stellhülse ist außer Eingriff mit der Außenverzahnung des Steuerkolbens.

Unter der "Betriebsposition" ist vorliegend die Stellung des Griffs zu verstehen, in der die Rastmittel des Adapterstücks in die erste, obere Rastnut der Stellhülse eingreift. In dieser Position ist die Innenverzahnung der Stellhülse im Eingriff mit der Außenverzahnung des Steuerkolbens. Eine Justierung über den Gewindeeingriff zwischen dem Außengewinde des Steuerzylinders und dem Innengewinde des Adapterstücks ist nicht möglich.

Unter der "Bedienposition" ist vorliegend die Stellung des Griffs zu verstehen, in der die Kugeln in der oberen Position der Steuerkulisse anliegen. Der Griff ist so zur einfachen Bedienung "ausgefahren".

Unter der "eingefahrenen Position" ist vorliegend die Stellung des Griffs zu verstehen, in der die Kugeln im Haltebereich der Steuerkulisse anliegen. Der Griff ist hier in einer eingefahrenen Position arretiert, in der beispielsweise der Griff bündig mit einer diesen Griff einfassenden Umgebung ist.

Andere Weiterbildungen und Ausgestaltungen der Erfindung sind in den übrigen Unteransprüchen angegeben. Ausführungsbeispiele sind in den Zeichnungen dargestellt und werden nachfolgend im Einzelnen beschrieben. Es zeigen:
- Figur 1: die schematische Darstellung eines Ventiloberteils mit Bedieneinrichtung mit Griff in Bedienposition;
- Figur 2: die schematische Darstellung des Ventiloberteils mit Bedieneinrichtung nach Figur 1 mit Griff in Justierposition;
- Figur 3: die Detaildarstellung des Ausschnitts Z aus Figur 2;
- Figur 4: die schematische Darstellung des Ventiloberteils mit Bedieneinrichtung nach Figur 1 mit Griffjustierung in maximaler Höheneinstellung:
- Figur 5: die schematische Darstellung des Ventiloberteils mit Bedieneinrichtung nach Figur 1 mit Griffjustierung in minimaler Höheneinstellung;
- Figur 6: die schematische Darstellung des Ventiloberteils mit Bedieneinrichtung nach Figur mit Griff in gedrückter Position,

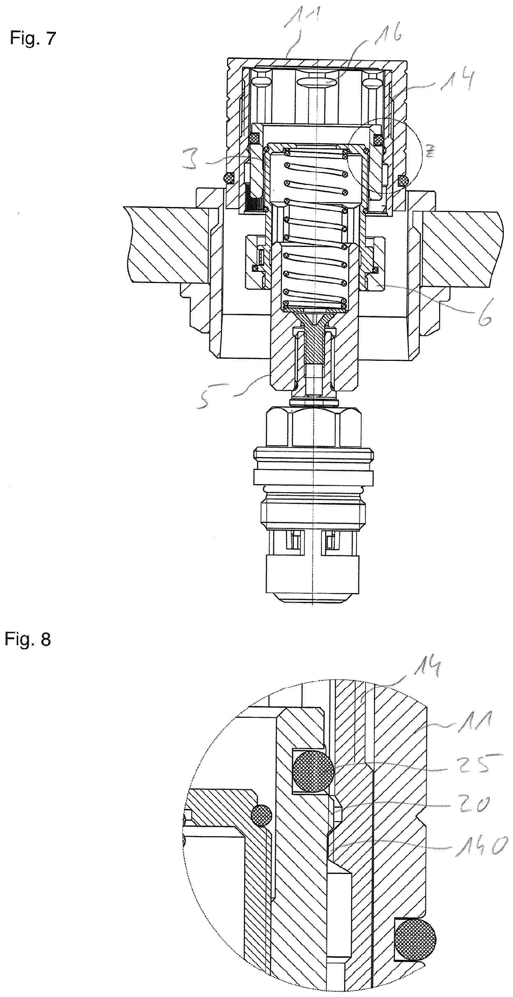

- Figur 7: die schematische Darstellung des Ventiloberteils mit Bedieneinrichtung nach Figur mit Griff in Abzugssicherungsstellung:
- Figur 8: die Detaildarstellung des Ausschnitts Z aus Figur 7;

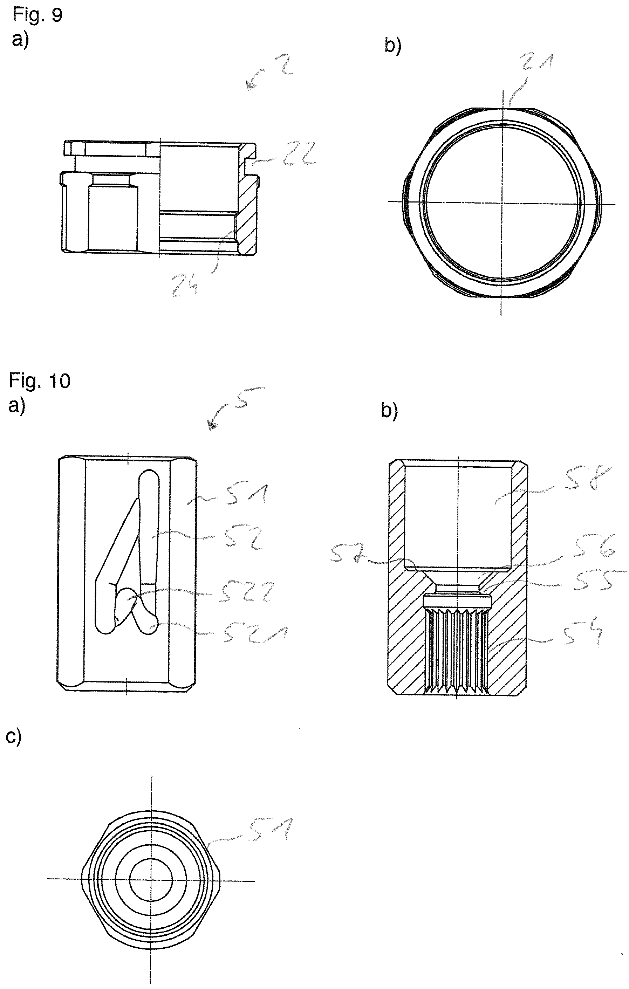

- Figur 9: die schematische Darstellung des Adapterstücks der Bedieneinrichtung aus Figur 1
a) im Teilschnitt,
b) in der Draufsicht;
- Figur 10: die schematische Darstellung des Steuerkolbens der Bedieneinrichtung aus Figur 1
a) in der Seitenansicht;
b) im Längsschnitt;
c) in der Draufsicht;

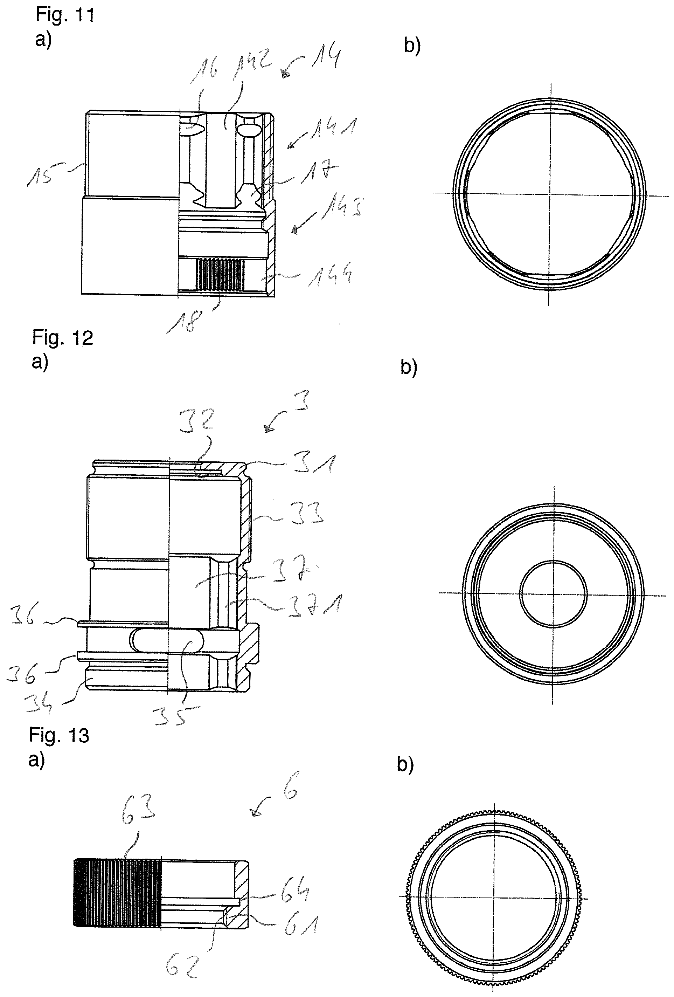

- Figur 11: die schematische Darstellung der Stellhülse des Griffs der Bedieneinrichtung aus Figur 1
a) im Teilschnitt,
b) in der Draufsicht;
- Figur 12: die schematische Darstellung des Steuerzylinders der Bedieneinrichtung aus Figur 1
a) im Teilschnitt,
b) in der Draufsicht;
- Figur 13: die schematische Darstellung des Mitnehmerstücks des Steuerkolbens der Bedieneinrichtung aus Figur 1
a) im Teilschnitt,
b) in der Draufsicht.

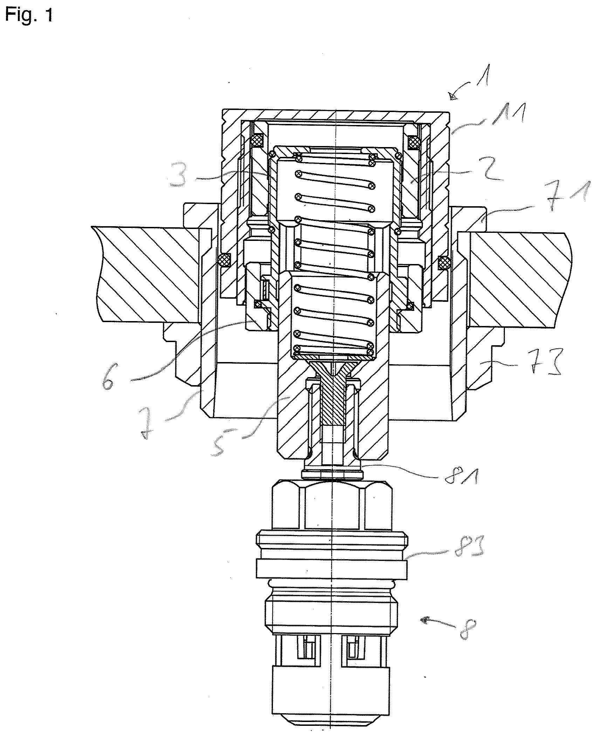

Die als Ausführungsbeispiel gemäß Figur 1 gewählte Ventiloberteil 8 ist gemäß der EP 1 696 162 A1 ausgebildet und weist ein Kopfstück 83 auf, dass von einer Steuerspindel 81 axial durchsetzt ist, durch die ein - nicht dargestellter - Ventilkörper betätigbar ist. Endseitig ist an der Steuerspindel 81 eine Bedieneinrichtung angeordnet, die einen Griff 1 umfasst, in dem ein Adapterstück 2 axial verschiebbar angeordnet ist, das einen Steuerzylinder 3 aufnimmt, mit dem es im Gewindeeingriff ist, in dem ein Steuerkolben 5 axial verschiebbar angeordnet ist und der eine Aufnahme zur formschlüssigen Verbindung mit dem unrunden Anschlussabschnitt 82 der Steuerspindel 81 eines Ventiloberteils 8 aufweist.

Alternativ kann der Anschlussabschnitt der Steuerspindel 81 auch zylindrisch ausgebildet sein. In diesem Fall ist eine drehfeste Verbindung beispielsweise mittels Kleben erforderlich. Der Steuerzylinder 3 ist endseitig mit einem Mitnehmerstück 6 versehen.

Der Griff 1 ist aus einem hohlzylindrischen, topfförmig ausgebildeten Griffstück 11 gebildet, in dessen zylindrische Seitenwand eine Stellhülse 14 eingeschraubt und verklebt ist. Alternativ kann der Griff 1 auch einteilig ausgeführt sein. Außen ist das Griffstück 11 mit einer Dichtungsnut 13 versehen, die einen O-Ring 131 aufnimmt. Griffstück 11 und Stellhülse 14 sind im Ausführungsbeispiel als Messingdrehteile hergestellt.

Die Stellhülse 14 ist im Wesentlichen hohlzylindrisch ausgebildet und weist einen ersten Abschnitt 141 auf, an den sich ein geringfügig durchmessererweiterter zweiter Abschnitt 143 anschließt. Der erste Abschnitt 141 ist außen mit einem Außengewinde 15 versehen, mit dem die Stellhülse 14 in ein hierzu in dem Griffstück 11 angeordnetes Innengewinde eingeschraubt und verklebt ist. In seine einen weitgehend zwölfeckförmigen Querschnitt aufweisende Innenmantelfläche sind in dem ersten Abschnitt 141 eine erste, obere Rastnut 16 und beabstandet zu dieser eine zweite, untere Rastnut 17 angeordnet. Die weitgehend zwölfeckförmige Querschnittskontur der Innenmantelfläche des ersten Abschnitts 141 dient der drehfesten Aufnahme des Adapterstücks 2, dessen Außenmantelfläche eine hierzu korrespondierende zwölfeckförmige Querschnittskontur aufweist. Die weitgehend zwölfeckförmige Querschnittskontur der Innenmantelfläche des ersten Abschnitts 141 sowie der Außenmantelfläche des Adapterstücks 2 ist durch sechs regelmäßig beabstandet in die Zylindermantelfläche eingebrachte rechteckige Abflachungen 142, 21 erzielt.

Alternativ kann an Stelle der zwölfeckförmigen Querschnittskontur auch jedwede andere unrunde, vorzugsweise vieleckige Kontur verwendet werden. Der zweite Abschnitt 143 ist mit einer Innenverzahnung 18 versehen. Die Innenmantelfläche des zweiten Abschnitts 143 weist eine weitgehend achteckförmige Querschnittskontur auf, die durch vier regelmäßig beabstandet in die mit der Innenverzahnung 18 versehene Zylinderinnenmantelfläche eingebrachte rechteckige Abflachungen 144 erzielt ist.

Das Adapterstück 2 ist im Wesentlichen hohlzylindrisch ausgebildet und weist, wie bereits ausgeführt, eine mit der Innenmantelfläche der Stellhülse 14 korrespondierende Außenmantelfläche mit nahezu zwölfeckförmigem Querschnitt auf. Beabstandet zu ihrem der Stellhülse 14 zugewandten Ende ist in das Adapterstück 2 außen umlaufend eine Nut 22 zur Aufnahme eines O-Rings 23 eingebracht. Der elastische O-Ring 23 dient zum Eingriff in die Rastnuten 16, 17 der Stellhülse 14. Auf seiner Innenmantelfläche ist das Adapterstück 2 mit einem Innengewinde 24 versehen.

Der Steuerzylinder 3 ist als im Wesentlichen hohlzylindrisches Messingdrehteil ausgebildet. An seiner dem Adapterstück 2 zugewandten Stirnseite weist der Steuerzylinder 3 einen innendurchmesserverjüngenden Absatz 31 auf, in den innen eine Stufe 32 eingebracht ist. Außen weist der Steuerzylinder 3 ein Außengewinde 33 auf, das sich etwa über die Hälfe seiner Länge erstreckt. Beabstandet zu dem Außengewinde 33 sind zwei diametral gegenüberliegende, radial sich erstreckende Langlochbohrungen 35 angeordnet, die von zwei axial beabstandet angeordneten, umlaufenden Stegen 36 eingefasst sind. Zwischen den Langlochbohrungen 35 und dem Außengewinde 33 weist der Steuerzylinder 3 innen einen durchmesserverjüngenden Absatz 37 auf, in den umlaufend radial beabstandet vier Führungskerben 371 eingebracht sind. Die Führungskerben 371 dienen der drehfesten Führung des Steuerkolbens 5.

In die beiden Langlochbohrungen 35 ist jeweils eine - nicht dargestellte - Kugel eingebracht, deren Durchmesser etwas kleiner ist, als die Breite der Langlochbohrung 35, so dass diese bereichsweise durch die jeweilige Langlochbohrung 35 hindurchragt und zwischen den Stegen 36 radial und umlaufend beweglich geführt ist. An seinem die Langlochbohrungen 35 aufweisenden endseitigen, mit Abschnitt ist auf den Steuerzylinder 3, der hierzu mit einem Außengewinde 34 versehenen ist, das Mitnehmerstück 6 aufgeschraubt, in dem eine Ringfeder 9 angeordnet ist.

Das Mitnehmerstück 6 umgreift die Stege 36 und ist durch einen O-Ring 65 gegenüber dem Steuerzylinder 3 abgedichtet. Das Mitnehmerstück 6 bildet mit den Stegen 36, der Ringfeder 9 und den Langlochbohrungen 35 einen Kugelkäfig für die beiden Kugeln aus, durch den ihre Bewegung in radialer Richtung begrenzt ist.

Der Steuerkolben 5 ist als im Wesentlichen zylindrisches Messingdrehteil ausgebildet. In seine zylindrische Außenmantelfläche sind radial beabstandet zueinander vier Abflachungen 51 eingebracht, wodurch ein im Wesentlichen achteckförmiger Querschnitt gebildet ist. Über die so gebildeten Ecken ist der Steuerkolben 5 in den Führungskerben 371 des Steuerzylinders 3 geführt. Jeweils zwischen zwei Abflachungen 51 sind in die Außenmantelfläche weiterhin diametral gegenüberliegend zwei Steuerkulissen 52 eingebracht. An seinem dem Steuerzylinder 3 abgewandten Ende ist in den Steuerkolben 5 zentrisch axial eine in Form eines Innenvielecks ausgebildete Aufnahme 54 für die ein Außenvieleck aufweisende Steuerspindel 81 eines Ventiloberteils 8 eingebracht. An die Aufnahme 54 schließt sich ein innendurchmesserverjüngter Abschnitt 55 an, in den zentrisch eine Kegelbohrung 56 zur Aufnahme des Kopfes einer Senckopfschraube 82 eingebracht ist. An den innendurchmesserverjüngten Abschnitt 55 schließt sich ein innendurchmessererweiterter Abschnitt 58 an, durch den ein Absatz 57 gebildet ist, der als Federsitz für eine Druckfeder 59 dient.

Das Mitnehmerstück 6 ist als im Wesentlichen hohlzylindrisches Messingdrehteil ausgebildet und weist an seinem dem Steuerzylinder 3 entgegengesetzten Ende einen innendurchmesserverjüngten Abschnitt 61 auf, der mit einem Innengewinde 62 versehen ist. Die Außenmantelfläche des Mitnehmerstücks 6 ist mit einer Außenverzahnung 63 zum Eingriff in die Innenverzahnung 18 der Stellhülse 14 versehen.

Das Adapterstück 2 ist mit seinem Innengewinde 24 auf das Außengewinde 33 des Steuerzylinders 3 geschraubt. In den Steuerzylinder 3 ist der Steuerkolben 5 eingesetzt, der durch seine mit der Innenmantelfläche des Steuerzylinders 3 korrespondierend ausgebildete unrunde Außenmantelfläche in dem Steuerzylinder 3 drehfest, jedoch axial verschiebbar geführt ist. Die durch die Langlochbohrungen 35 des Steuerzylinders 3 bereichsweise hindurchtretenden - nicht dargestellten - Kugeln greifen dabei jeweils in eine Steuerkulisse 52 des Steuerkolbens 5 ein. An dem Absatz 57 des Steuerkolbens 5 liegt die Druckfeder 59 an, die auf ihrer gegenüberliegenden Seite gegen die Stellhülse 14 vorgespannt ist.

In Betriebsposition des Griffs 1 mit seiner Stellhülse 14, in der der in der Nut 22 des Adapterstücks 2 eingesetzte O-Ring 23 des auf den Steuerzylinder 3 aufgeschraubten Adapterstücks 2 in die obere, erste Rastnut 16 der Stellhülse 14 eingreift, ist die Innenverzahnung der Stellhülse 14 mit der Außenverzahnung 63 des Mitnehmerstücks 6 im Eingriff. In dieser Betriebsposition ist eine Übertragung eines Drehmoments von dem Griff 1 auf das mit der Steuerspindel 81 des Ventiloberteils 8 über den Steuerkolben 5 verbundenen Mitnehmerstück 6 ermöglicht. Das Ventiloberteil 8 ist im Ausführungsbeispiel gemäß der EP 1 696 162 A1 ausgebildet. Es weist ein Kopfstück 83 auf, dass von der Steuerspindel 81 axial durchsetzt ist.

Bei der wandseitigen Montage einer Sanitärarmatur, beispielsweise einer Duscharmatur, werden die Wasserleitungen von dem Installateur in der Wand an ein Ventiloberteil 8 der Armatur angeschlossen. Das Ventiloberteil 8 weist regelmäßig eine lange Steuerspindel 81 auf, die nach Fertigstellung der wandseitigen Arbeiten, einschließlich möglicher Fliesenarbeiten, auf ein gewünschtes Maß abgelängt wird. Die Steuerspindel 81 einrahmend ist der Wanddurchtritt mit einer Einbauhülse 7 versehen. Die Steuerspindel 81 wird mit ihrer Außenverzahnung in die eine Innenverzahnung aufweisende Aufnahme 54 des Steuerkolbens 5 eingeführt und über eine Senkkopfschraube 82 befestigt. Eine solche Einbausituation ist in Figur 1 schematisch dargestellt. Aufgrund von Ungenauigkeiten beim Einbau des Ventiloberteils 8 und dem Ablängen der Steuerspindel 81 ragt das Griffstück 11 des Griffs 1 deutlich über den Kragen 71 der Einbauhülse 7 hinaus, die in diesem Ausführungsbeispiel ein Außengewinde aufweist, das mit einer Kontermutter 73 verschraubt ist.

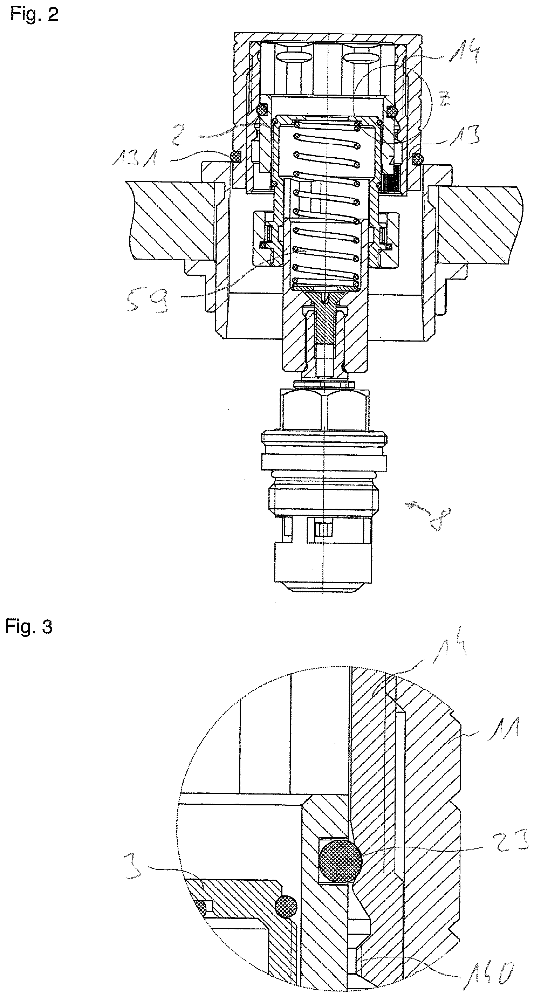

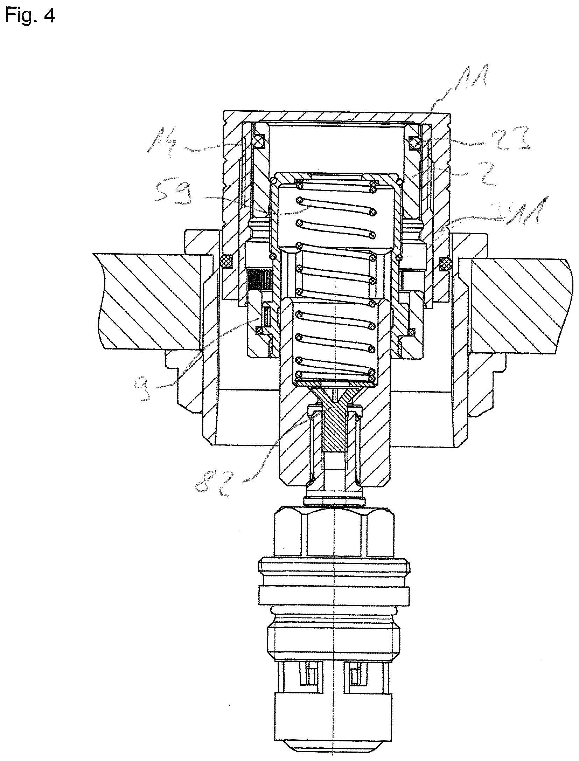

Der Griff 1 kann nun mit seiner längsverschieblich mit dem Adapterstück 2 verbundenen Stellhülse 14 durch Ziehen an dem Griffstück 11 auf dem Adapterstück 2 verschoben werden, bis der O-Ring 23 in die zweite, untere Rastnut 17 der Stellhülse 14 einrastet. In dieser Position ist die Innenverzahnung 18 der Stellhülse 14 außer Eingriff mit der Außenverzahnung 63 des Mitnehmerstücks 6 (vgl. Figur 2). Durch Drehen an dem Griffstück 11 kann nun das drehfest mit der Stellhülse 14 verbundene Adapterstück 2 über den Gewindeeingriff mit dem Außengewinde 33 des Steuerzylinders 3 axial relativ zu diesem verstellt werden (vgl. Figur 4).

Bei der Umstellung des Griffs 1 mit seiner Stellhülse 14 aus der Betriebsposition in die Justierposition ist zum Ausbringen des O-Rings 23 aus der ersten, oberen Rastnut 16 eine Zugkraft erforderlich, um den O-Ring 23 in die zweite, untere Rastnut 17 zu verbringen. Um zu verhindern, dass das Griffstück 11 durch Einwirken einer übermäßigen Zugkraft mit dem O-Ring 23 über die untere Rastnut 17 hinaus verbracht und von dem Steuerkolben 5 abgezogen werden kann, ist zwischen dem Adapterstück 2 und der Stellhülse 14 eine Verliersicherung angeordnet. Hierzu weist die Stellhülse 14 einen innen umlaufenden Innengewindesteg 140 auf, in dem ein an dem Adapterstück 2 außen umlaufend angeordneter Außengewindesteg 20 einschraubbar ist. Im Zuge der Montage wird das Adapterstück 2 mit seinem Außengewindesteg 20 in den umlaufenden Innengewindesteg 140 der Stellhülse 14 eingeschraubt und anschließend überdreht. Hiernach befindet sich der Außengewindesteg 20 in Richtung des Griffteils 11 gesehen hinter dem Innengewindesteg 140. Das Adapterstück 2 ist dadurch axial in der Stellhülse 14 verliersicher gehalten.

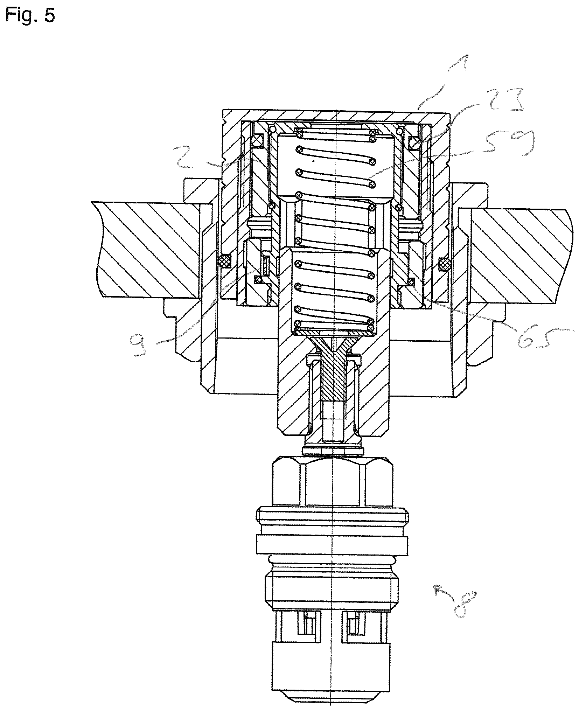

Nachfolgend kann die Stellhülse 14 durch Druck auf das Griffstück 11 wieder entlang des Adapterstücks 2 verschoben werden, bis der O-Ring 23 in die erste, obere Rastnut 16 der Stellhülse 14 einrastet. Die Bedieneinheit ist nun gegenüber der Einbauhülse 7 justiert. Sie befindet sich in der Betriebsposition (vgl. Figur 5).

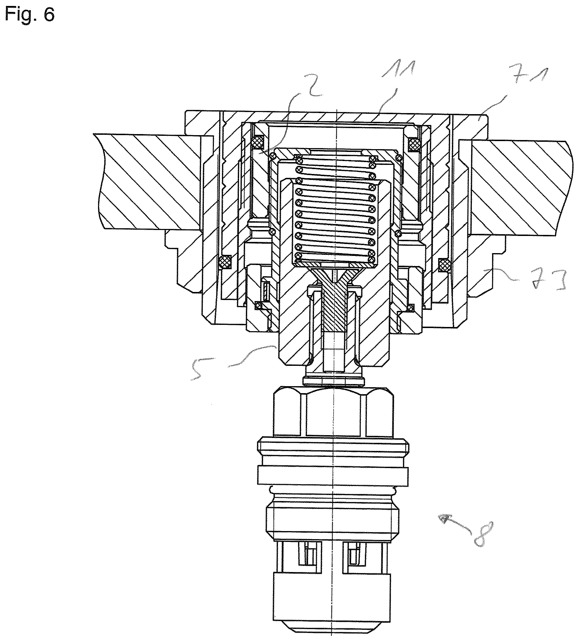

Durch Drücken des Griffs 1 wird der Steuerzylinder 3 über die Stellhülse 14 entlang des Steuerkolbens 5 bewegt, wobei die - nicht dargestellten - Kugeln in der Steuerkulisse 52 laufen. Hierbei können sich die Kugeln in den Langlochbohrungen 35 radial bewegen. Am Anschlag des Steuerkolbens 5 in dem Steuerzylinder 3 erreichen die Kugeln den Umschaltabschnitt 521 der jeweiligen Steuerkurve 52. Nach Loslassen des Griffs 1 wird der Steuerzylinder 3 durch die Rückstellkraft der Druckfeder 59 zurückbewegt, wodurch die Kugeln in den Haltebereich 522 der Steuerkulisse 52 bewegt werden. In dieser Stellung ist der Griff 1 durch die Kugeln gehalten. In dieser Position ist der Griff 1 vollständig in die Einbauhülse 7 versenkt in der eingefahrenen Position, wobei die Oberflächen von Griff 1 und Kragen 71 der Einbauhülse 7 auf einer Ebene liegen (vgl. Figur 6).

Bei erneutem Drücken des Griffs 1 werden die Kugeln aus dem Haltebereich 522 der Steuerkulisse 52 herausbewegt. Nach Loslassen des Griffs 1 wird der Steuerzylinder 3 durch die Rückstellkraft der Druckfeder 59 nun vollständig zurückbewegt. In dieser Bedienposition ragt der Griff weit aus der Einbauhülse 7 hinaus. Durch den Eingriff der Innenverzahnung 18 der Stellhülse 14 mit der Außenverzahnung 63 des Mitnehmerstücks 6, das über den Steuerkolben 5 mit der Steuerspindel 81 des Ventiloberteils 8 verbunden ist, kann nun eine Betätigung des Ventiloberteils 8 durch eine Drehung der Steuerspindel 81 über den Griff 1 erfolgen. Nach erfolgter Betätigung des Ventiloberteils 8 kann durch erneutes Drücken des Griffs 1 dieser wieder in der Einbauhülse 7 versenkt werden.

## Patentansprüche

1. Ventiloberteil für Sanitärarmaturen, mit einem Kopfstück, das von einer Steuerspindel axial durchsetzt ist, über die ein in dem Kopfstück angeordneter Ventilkörper betätigbar ist, und die mit einer einen Griff (1) umfassenden Bedieneinrichtung verbunden ist, wobei der Griff (1) relativ zum Kopfstück (83) koaxial zur Steuerspindel (81) verschiebbar ist, **dadurch gekennzeichnet, dass** der Griff (1) über ein Adapterstück (2) mit der Steuerspindel (81) verbunden ist, das in dem Griff (1) verschiebbar gelagert ist, wobei das Adapterstück (2) in dem Griff (1) derart verliersicher gehalten ist, dass auch bei übermäßigem Zug an dem Griff (1) ein unbeabsichtigtes Entfernen des Griffs von der Spindel (82) vermieden ist, wobei das Adapterstück (2) bereichsweise mit einem Außengewinde versehen ist und der Griff (1) bereichsweise mit einem Innengewinde versehen ist, und wobei das Außengewinde des Adapterstücks (2) in das Innengwinde des Griffs (1) eingeschraubt und nachfolgend überdreht ist, wodurch die Verliersicherung gebildet ist.

2. Ventiloberteil nach Anspruch 1, **dadurch gekennzeichnet, dass** der Griff (1) einen innen umlaufenden Innengewindesteg (140) aufweist und das Adapterstück (2) einen zumindest bereichsweise außen umlaufend angeordneten Außengewindesteg (20) aufweist, der in den Innengewindesteg (140) eingeschraubt und nachfolgend derart überdreht ist, dass sich der Außengewindesteg (20) in Richtung des Griffs (1) gesehen hinter dem Innengewindesteg (140) befindet.

3. Ventiloberteil nach einem der vorgenannten Ansprüche, **dadurch gekennzeichnet, dass** in dem Griff (1) eine Stellhülse (14) angeordnet ist, die den umlaufenden Gewindesteg (140) aufweist und in der das Adapterstück (2) verschiebbar gelagert ist.

4. Ventiloberteil nach einem der vorgenannten Ansprüche, **dadurch gekennzeichnet, dass** der Griff (1) relativ zum Kopfstück (83) drehbar und zumindest in einer axialen Position drehfest mit der Steuerspindel verbunden ist.

5. Ventiloberteil nach einem der vorgenannten Ansprüche, **dadurch gekennzeichnet, dass** das Adapterstück (2) zumindest bereichsweise umlaufend wenigstens ein Rastmittel aufweist, wobei innen in dem Griff (1) oder der Stellhülse (14) wenigstens eine Rastnut (16, 17) angeordnet ist, mit der das wenigstens eine Rastmittel in einer definierten Position des Adapterstücks (2) in dem Griff (1) oder in der Stellhülse (14) verrastbar sind.

6. Ventiloberteil nach Anspruch 5, **dadurch gekennzeichnet, dass** das wenigstens eine Rastmittel durch eine oder mehrere Rastnasen gebildet ist,

7. Ventiloberteil nach Anspruch 5, **dadurch gekennzeichnet, dass** das wenigstens eine Rastmittel durch ein umlaufendes elastisches Ringelement, vorzugsweise durch einen O-Ring gebildet ist.

8. Ventiloberteil nach einem der Ansprüche 6 bis 7, **dadurch gekennzeichnet, dass** innen in dem Griff (1) oder der Stellhülse (14) axial beabstandet zueinander zwei Rastnuten (16, 17) vorzugsweise radial umlaufend angeordnet sind.

9. Ventiloberteil nach Anspruch 4 oder 5, **dadurch gekennzeichnet, dass** der Griff (1) oder die Stellhülse (14) mit einer Innenverzahnung (18) versehen ist, die in einer Außenverzahnung (61) eines mit der Steuerspindel (81) verbundenen Mitnehmers (6) eingreift, wodurch der Griff (1) axial entlang dem Mitnehmer (6) verschiebbar geführt ist.

10. Ventiloberteil nach einem der vorgenannten Ansprüche, **dadurch gekennzeichnet, dass** der Griff (1) über eine angeordnete Arretiereinrichtung in wenigstens zwei axialen Positionen festlegbar ist.

11. Ventiloberteil nach Anspruch 10, **dadurch gekennzeichnet, dass** die Arretiereinrichtung einen Steuerkolben (5) umfasst, der in einem Steuerzylinder (3) geführt ist und der eine Steuerkulisse (52) aufweist, in die ein an dem Steuerzylinder (3) angeordnetes Eingriffsteil eingreift, das vorzugsweise durch eine Kugel (38) gebildet ist, die in dem Steuerzylinder (3) radial bewegbar geführt ist, wobei zwischen dem Steuerzylinder (3) und dem Steuerkolben (5) eine Feder (59) angeordnet ist, die gegen den Steuerzylinder (3) vorgespannt ist.

12. Ventiloberteil nach Anspruch 11, **dadurch gekennzeichnet, dass** der Steuerkolben (5) den Mitnehmer (6) aufweist, in dessen Außenverzahnung (63) die Innenverzahnung (18) der Stellhülse (14) eingreift.

13. Ventiloberteil nach Anspruch 11 oder 12, **dadurch gekennzeichnet, dass** der Steuerzylinder (3) ein Außengewinde (33) aufweist, auf welches das Adapterstück (2) mit seinem Innengewinde (24) aufgeschraubt ist.

14. Sanitärarmatur, **dadurch gekennzeichnet, dass** diese ein Ventiloberteil nach einem der vorgenannten Ansprüche aufweist.

## Claims

1. Valve upper part for sanitary fittings, comprising a head piece that is axially penetrated by a control spindle via which a valve body arranged in the head piece can be actuated and that is connected to an operating device that comprises a handle (1), where the handle (1) can be shifted relative to the head piece (83) coaxially to the control spindle (81), **characterised in that** the handle (1) is connected to the control spindle (81) via an adapter piece (2) that is supported movably in the handle (1), where the adapter piece (2) is held captive in the handle (1) so that even excessive pulling on the handle (1) cannot cause accidental removal of the handle from the spindle (82), where the adapter piece (2) is provided in some areas with a male thread and the handle (1) is provided in some areas with a female thread, and where the male thread of the adapter piece (2) is screwed into the female thread of the handle (1) and then over-tightened to form the captive-retention feature.

2. Valve upper part in accordance with claim 1, **characterised in that** the handle (1) comprises an inner circumferential threaded female shoulder (140) and the adapter piece (2) comprises a threaded male shoulder (20) arranged circumferentially on the outside at least in some areas, that is screwed into the threaded female shoulder (140) and subsequently over-tightened so that the threaded male shoulder (20) is located behind the threaded female shoulder (140) when viewed in the direction of the handle (1).

3. Valve upper part in accordance with any one of the preceding claims, **characterised in that** an adjustment sleeve (14) that comprises the circumferential threaded shoulder (140) and in which the adapter piece (2) is movably supported is arranged in the handle (1).

4. Valve upper part in accordance with any one of the preceding claims, **characterised in that** the handle (1) can be turned relative to the head piece (83) and is non-rotatably connected to the control spindle at least in an axial position.

5. Valve upper part in accordance with any one of the preceding claims, **characterised in that** the adapter piece (2) comprises at least one circumferential latching means at least in some areas, where at least one latching groove (16, 17) that can be used to latch the at least one latching means in a defined position of the adapter piece (2) in the handle (1) or in the adjustment sleeve (14) is arranged on the inside of the handle (1) or the adjustment sleeve (14).

6. Valve upper part in accordance with claim 5, **characterised in that** the at least one latching means is formed by one or several latching lugs.

7. Valve upper part in accordance with claim 5, **characterised in that** the at least one latching means is formed by a circumferential elastic ring element, preferably by an O-ring.

8. Valve upper part in accordance with claims 6 to 7, **characterised in that** two latching grooves (16, 17) are preferably radially circumferentially arranged on the inside of the handle (1) or the adjustment sleeve (14), at an axial distance from each other.

9. Valve upper part in accordance with claim 4 or 5, **characterised in that** the handle (1) or the adjustment sleeve (14) is provided with inner teeth (18) that engage with the outer teeth (61) of a tappet (6) connected to the control spindle (81), which causes the handle (1) to be guided axially movably along the tappet (6).

10. Valve upper part in accordance with any one of the preceding claims, **characterised in that** the handle (1) can be fixed in at least two axial positions via an arranged latching device.

11. Valve upper part in accordance with claim 10, **characterised in that** the latching device comprises a control piston (5) that is guided in a control cylinder (3) and that comprises a control gate (52) with which an engagement part arranged on the control cylinder (3) engages that is preferably formed by a ball (38) that is guided radially movably in the control cylinder (3), where a spring (59) that is pre-loaded against the control cylinder (3) is arranged between the control cylinder (3) and the control piston (5).

12. Valve upper part in accordance with claim 11, **characterised in that** the control piston (5) comprises the tappet (6) with the outer teeth (63) of which the inner teeth (18) of the adjustment sleeve (14) engage.

13. Valve upper part in accordance with claim 11 or 13, **characterised in that** the control cylinder (3) comprises a male thread (33) onto which the adapter piece (2) is screwed with its female thread (24).

14. Sanitary fitting, **characterised in that** it comprises a valve upper part in accordance with one of the preceding claims.

## Revendications

1. Partie supérieure de soupape pour robinetteries sanitaires, comprenant une pièce têtière traversée axialement par une broche de commande via laquelle est actionnable un corps de soupape disposé dans la pièce têtière, et qui est reliée à un dispositif de commande comprenant une poignée (1), sachant que la poignée (1) est déplaçable, relativement à la pièce têtière (83), coaxialement à la broche de commande (81), **caractérisée en ce que** la poignée (1) est reliée via un adaptateur (2) avec la broche de commande (81), adaptateur qui est en appui coulissant dans la poignée (1), sachant que l'adaptateur (2) est retenu imperdable dans la poignée (1) d'une façon telle que même en cas de traction excessive exercée sur la poignée (1) un détachement involontaire de la poignée de la broche (82) est évité, sachant que l'adaptateur (2) est muni localement d'un filetage extérieur et que la poignée (1) est munie localement d'un filetage intérieur, et sachant que le filetage extérieur de l'adaptateur (2) est vissé dans le filetage intérieur de la poignée (1) et qu'il est ensuite vissé d'un quantum excessif pour créer la sécurité anti-perte.

2. Partie supérieure de soupape selon la revendication 1, **caractérisée en ce que** la poignée (1) présente une nervure (140) périphérique intérieure à filetage intérieur et que l'adaptateur (2) présente une nervure (20) à filetage extérieur disposée au moins localement périphérique à l'extérieur, nervure qui est vissée dans la nervure (140) à filetage intérieur et qui est ensuite vissée d'un quantum excessif tel que la nervure (20) à filetage extérieur se trouve, observée en direction de la poignée (1), derrière la nervure (140) à filetage intérieur.

3. Partie supérieure de soupape selon l'une des revendications précédentes, **caractérisée en ce que** dans la poignée (1) est disposée une douille d'ajustement (14) qui présente la nervure (140) filetée périphérique et dans laquelle douille l'adaptateur (2) est en appui coulissant.

4. Partie supérieure de soupape selon l'une des revendications précédentes, **caractérisée en ce qu'**il est possible de tourner la poignée (1) relativement à la pièce têtière (83) et que la poignée est reliée, au moins sur une position axiale, avec la broche de commande.

5. Partie supérieure de soupape selon l'une des revendications précédentes, **caractérisée en ce que** l'adaptateur (2) présente - au moins localement sur la périphérie - au moins un moyen de crantage, sachant qu'à l'intérieur de la poignée (1) ou de la douille d'ajustement (14) est disposée au moins une gorge de crantage (16, 17) avec laquelle il est possible de faire encranter au moins un moyen de crantage sur une position définie de l'adaptateur (2) dans la poignée (1) ou dans la douille d'ajustement (14).

6. Partie supérieure de soupape selon la revendication 5, **caractérisée en ce qu'**au moins le moyen de crantage est formé par un ou plusieurs crans.

7. Partie supérieure de soupape selon la revendication 5, **caractérisée en ce qu'**au moins le moyen de crantage est formé par un élément annulaire élastique périphérique, de préférence par un joint torique.

8. Partie supérieure de soupape selon l'une des revendications 6 à 7, **caractérisée en ce qu'**à l'intérieur dans la poignée (1) ou dans la douille d'ajustement (14) deux gorges de crantage (16, 17) réciproquement distantes axialement sont disposées de préférence périphériques radialement.

9. Partie supérieure de soupape selon la revendication 4 ou 5, **caractérisée en ce que** la poignée (1) ou la douille d'ajustement (14) est munie d'une denture intérieure (18) qui engrène dans une denture extérieure (61) d'un taquet entraîneur (6) relié avec la broche de commande (81), faisant que la poignée (1) est guidée coulissante axialement le long du taquet entraîneur (6).

10. Partie supérieure de soupape selon l'une des revendications précédentes, **caractérisée en ce que** la poignée (1) est immobilisable sur au moins deux positions axiales via un dispositif d'arrêt y présent.

11. Partie supérieure de soupape selon la revendication 10, **caractérisée en ce que** le dispositif d'arrêt comprend un piston de commande (5) qui est guidé dans un cylindre de commande (3) et qui présente une coulisse de commande (52) dans laquelle engrène une pièce d'engrènement disposée contre le cylindre de commande (3), pièce qui est formée de préférence par une bille (38) guidée déplaçable radialement dans le cylindre de commande (3), sachant qu'entre le cylindre de commande (3) et le piston de commande (5) est disposé un ressort (59) qui est précontraint contre le cylindre de commande (3).

12. Partie supérieure de soupape selon la revendication 11, **caractérisée en ce que** le piston de commande (5) présente le taquet entraîneur (6) dans la denture extérieure (63) duquel engrène la denture intérieure (18) de la douille d'ajustement (14).

13. Partie supérieure de soupape selon la revendication 11 ou 13, **caractérisée en ce que** le cylindre de commande (3) présente un filetage extérieur (33) sur lequel est vissé l'adaptateur (2) par son filetage intérieur (24).

14. Robinetterie sanitaire, **caractérisée en ce que** cette dernière présente une partie supérieure de soupape selon l'une des revendications précédentes.
